(19) Europäisches Patentamt
European Patent Office
Office européen des brevets

(11) Veröffentlichungsnummer: **0 304 686 A1**

# (12) EUROPÄISCHE PATENTANMELDUNG

(21) Anmeldenummer: **88112598.3**

(51) Int. Cl.⁴: **B01D 53/34**

(22) Anmeldetag: **03.08.88**

(30) Priorität: **17.08.87 DE 3727397**

(43) Veröffentlichungstag der Anmeldung:
**01.03.89 Patentblatt 89/09**

(84) Benannte Vertragsstaaten:
**AT BE CH DE ES FR GB GR IT LI LU NL SE**

(71) Anmelder: **Uhde GmbH**
**Friedrich-Uhde-Strasse 15**
**D-4600 Dortmund 1(DE)**

(72) Erfinder: **Erath, Richard, Dipl.-Ing.**
**Bittermarkstrasse 29**
**D-4600 Dortmund 30(DE)**
Erfinder: **Henkel, Jürgen, Dipl.-Ing.**
**Schwärmerweg 18a**
**D-4600 Dortmund 30(DE)**

## (54) Verfahren zur Abscheidung von Schwefeloxiden aus Rauchgasen.

(57) Mittels einem Verfahren zur Abscheidung von Schwefeloxiden aus Rauchgasen, wobei die Rauchgase durch ein Bett aus Schüttmaterial geleitet werden, soll eine Lösung geschaffen werden, mit der in einfacher Weise und preisgünstig Schwefeloxide aus Rauchgasen abgeschieden werden.

Dies wird verfahrensgemäß dadurch erreicht, daß ein Schüttmaterial in stückiger Form eingesetzt wird, wobei das Schüttmaterial zu 30 -100 % aus Klärschlamm besteht. Der Klärschlamm in stückiger Form wird in bekannter Weise gewonnen aus einer Behandlung von kommunalen und/oder industriellem Abwasser.

FIG. 1

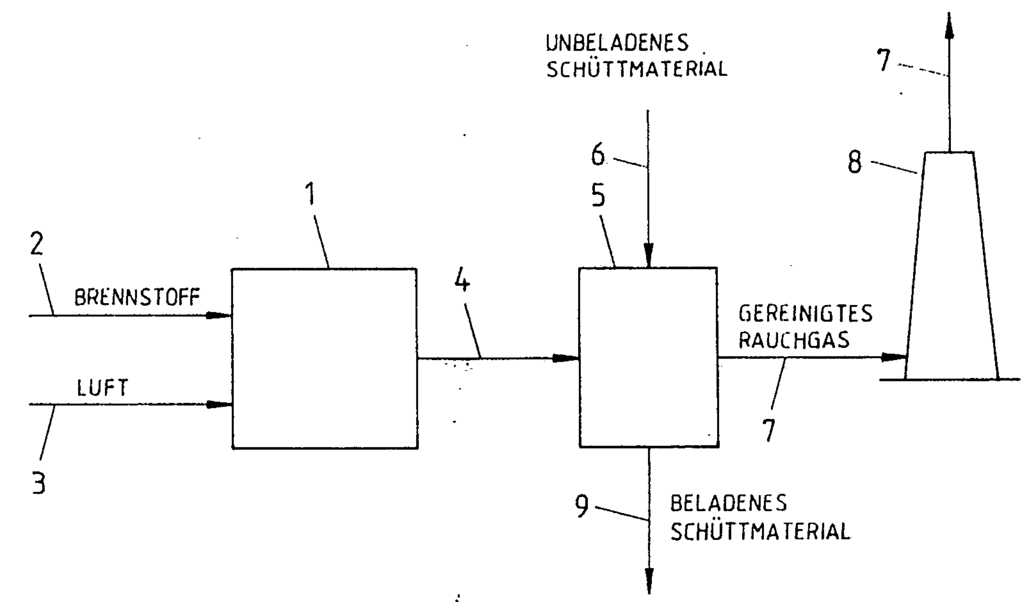


EP 0 304 686 A1

## Verfahren zur Abscheidung von Schwefeloxiden aus Rauchgasen.

Die vorliegende Erfindung betrifft ein Verfahren zur Abscheidung von Schwefeloxiden aus Rauchgasen mittels eines Schüttmaterials, wobei die Rauchgase durch ein Bett aus Schüttmaterial geleitet werden.

Rauchgase aus Kesselanlagen, Produktionsbetrieben u. dgl. sind die Hauptquellen für die Verschmutzung der Atmosphäre mit Schwefeloxiden. Zwecks Reduzierung der Schwefeloxidemissionen sind weltweit derzeit etwa 200 verschiedene Verfahren bekannt.

Diese lassen sich abhängig von der Beschaffenheit des Endproduktes in trockene, halbtrockene und nasse Verfahren unterscheiden.

Eine bekannte Möglichkeit zur trockenen Abscheidung von SO2 aus Rauchgasen ist die Adsorption an Aktivkoks oder Braunkohlenkoks.

Diese Art der Abscheidung von Schwefeloxiden aus Rauchgasen wird u.a. in folgenden Veröffentlichungen und Patentanmeldungen beschrieben:

R. Erath: "Das Bergbau-Forschung/UHDE-Verfahren", Dokumentation Rauchgasreinigung (Sept. 1985) S. 56/59, VDI-Verlag, Düsseldorf.

E. Richter und K. Knoblauch: "Verfahren der Bergbau-Forschung zur Rauchgasentschwefelung und NOx-Entfernung" Technische Mitteilungen 1/2 (1985), S. 13/15:

DE-PS 1519 962
DE-PS 1619 840
DE-PS 1917 481
DE-PS 1951 855
DE-PS 2141 075
DE-PS 2550 190
DE-OS 2626 939
DE-PS 2627 479
DE-OS 2911 712
DE-OS 3014 934
DE-OS 3036 531
DE-OS 3039 477
DE-OS 3101 053
DE-OS 3138 665
DE-OS 3423 744
DE-OS 3423 761
DE-OS 3429 999
DE-OS 2445 218
DE-OS 3011 023
DE-OS 3541 447
DE-OS 0198 133

Aufgrund der relativ hohen Herstellungskosten von Aktivkoks auf Steinkohlenbasis wird dieses Material nach der Beladung mit Schwefelsäure wieder desorbiert und zur Rauchgasreinigungsstufe (Adsorption) zurückgeführt. Dabei entstehen Verluste an Aktivkoks durch mechanischen Abrieb und chemischen Verbrauch. Bei der Desorption des Aktivkokses wird ein Gas freigesetzt, daß einen hohen Gehalt an $SO_2$ aufweist. Dieses Gas kann alternativ zu Schwefel, Schwefelsäure oder flüssigem Schwefeldioxid weiterverarbeitet werden.

Braunkohlenkoks ist ein relativ preiswertes Adsorptionsmittel. Es eignet sich jedoch nicht zur Reaktivierung. Deshalb wird das beladene Material entweder deponiert oder in einer Anlage verbrannt, die mit einer Rauchgasentschwefelungsanlage ausgerüstet ist. Braunkohlenkoks als Adsorptionsmittel weist eine feine Körnung auf. Daraus resultiert bei Einsatz von Braunkohlenkoks gegenüber dem Einsatz von Aktivkoks eine wesentlich geringere Anströmgeschwindigkeit des Rauchgases und/oder ein höherer rauchgasseitiger Druckverlust durch das Materialbett.

Der Erfingung liegt die Aufgabe zugrunde, ein Verfahren zur Abscheidung von Schwefeloxiden aus Rauchgasen zu finden, bei dem ein einfach herzustellendes und wirksames Mittel zur trockenen Abscheidung eingesetzt wird.

Die Aufgabe wird erfindungsgemäß gelöst durch Verwendung eines Schüttmaterials in stückiger Form,

wobei das Schüttgutmaterial zu 30 - 100 % Gew.% aus Klärschlamm besteht.

Die Erfindung wird vorteilhaft ausgestaltet nach den Merkmalen der Unteransprüche.

Die mit der Erfindung erzielbaren Vorteile bestehen darin, daß sich mit Klärschlamm ausgezeichnete Abscheideleistungen von Schwefeloxiden aus Rauchgasen auf mindestens 400 mg/m$^3$ i.N.tr. erzielen lassen bei hohen Anströmgegeschwindigkeiten und bei geringerem rauchgasseitigem Druckverlust. Schüttmaterial der geforderten Konzentration fällt in genügender Menge an und kann mittels bekannter Methoden bei der Behandlung von komunalem und/oder industriellem Abwasser als Vorklärschlamm und/oder als biologischer Überschußschlamm gewonnen werden. Üblicherweise wird dieser Schlamm sonst in teilentwässerter Form entweder landwirtschaftlich genutzt, deponiert, verbrannt oder kompostiert.

Für das erfindungsgemäße Verfahren kann der Klärschlamm vor dem Einsatz in der Rauchgasreinigungsanlage alternativ oder kumulativ durch folgende Verfahren vorbehandelt werden:
- mechanische Entwässerung
- chemische oder thermische Konditionierung
- thermische Trocknung
- Erhitzung
- Faulung
- Kompostierung
- chemische Stabilisierung

Die Überführung des Klärschlammes in stückige Form erfolgt entweder während des Trocknungsvorganges oder anschließend durch Brechen und Klassierung.

Die Schwefeloxide werden adsorptiv an das Schüttmaterial gebunden und unter Mitwirkung von im Rauchgas vorhandenem Sauerstoff und Wasserdampf zu Schwefelsäure umgesetzt.

$$\left.\begin{array}{lll} (SO_2)\ gas & \longrightarrow (SO_2)ads & + \\ 1/2\ (O_2)\ gas & \longrightarrow (O)ads & + \\ (H_2O)\ gas & \longrightarrow (H_2O)ads & + \end{array}\right\} \longrightarrow (H_2SO_4)\ ads$$

Zur Entwässerung des in der Abwasserbehandlungsanlage anfallenden Klärschlammes werden häufig als Filterhilfsmittel alkalisch reagierende Calciumverbindungen zugesetzt. Die bei der Vorbehandlung nicht umgesetzten Calciumverbindungen dienen zusätzlich der Reinigung des Rauchgases, weil sie beim Einsatz in der Wanderbett-Entschwefelungskolonne chemisch mit den sauren Bestandteilen des Rauchgases zu Calciumsilfit, Calciumsulfat und Calciumchlorid reagieren.

Nachfolgend werden Anwendungsmöglichkeiten der Erfindung exemplarisch beschrieben. Es zeigen:

Fig. 1 Verfahrensschema einer Schwefeloxidabscheidung

Fig. 2 Verfahrensschema einer Rest-Schwefeloxidabscheidung

In der Verbrennungsanalge 1 nach Fig. 1 wird schwefelhaltiger Brennstoff 2 mit Luft 3 oxidiert. Das dabei entstehende schwefeloxidhaltige Rauchgas 4 wird zu der Wanderbett-Entschwefelungskolonne 5 geleitet. Beim Kontakt mit dem von oben nach unten wandernden Schüttmaterial 6 werden die Schwefeloxide adsorbiert und/oder chemisch gebunden, und zwar bei Temperaturen von 80 - 150 °C. Das gereinigte Rauchgas 7 wird über den Kamin 8 in die Atmosphäre geleitet. Das beladene Schüttmaterial 9 wird unterhalb der Wanderbett-Entschwefelungskolonne abgezogen und kann entweder deponiert oder in einer Verbrennungsanlage verbrannt werden.

Im Gegensatz zu der Schaltung in Fig. 1 wird bei der Schaltung in Fig. 2 das schwefeloxidhaltige Rauchgas in einer Entschwefelungsanlage 10 vorgereinigt. Die weitere Reduzierung der Stickoxide erfolgt in der bereits beschriebenen Wanderbett-Entschwefelungskolonne vorgeschalteten Anlage 1 verbrannt werden.

Bei Rückführung des beladenen Schüttmaterials 9 zur Verbrennungsanlage 1 erfolgt zwar die gesamte Ausschleusung der abgeschiedenen Schwefelverbindungen durch die Entschwefelungsanlage 10, jedoch ist die Schwefeloxidabscheidung in der Entschwefelungsanlage 10 kostengünstiger durch Erhöhung der Rohrgasbeladung als durch Erniedrigung der Reingasbeladung zu erzielen.

Aufgrund der fluiddynamischen Eigenschaften des Schüttmaterials (Korngröße, spez. Gewicht) lassen sich hohe Anströmgeschwindigkeiten bei geringem rauchgasseitigem Druckverlust erzielen. Dies ist maßgebend für die Dimensionierung der Wanderbett-Entschwefelungskolonne.

Bei dem Einsatz einer DENOX-Anlage auf Basis eines kohlenstoffhaltigen Katalysatormaterials (z.B. Aktivkoks oder Braunkohlenkoks) hinter der Wanderbett-Entschwefelungskolonne läßt sich durch die Schaltung gemäß Fig. 1 oder 2 eine Reduzierung des Verbrauchs an Katalysatormaterial erzielen, weil der

Hauptverbrauch des Katalysatormaterials aus der Beladung des Materials mit Schwefeloxiden resultiert.

Wegen des niedrigen Preises des erfindungsgemäß eingesetzten Schüttmaterials ist für die Lagerhaltung kaum Kapitaldienst erforderlich. Somit kann das Rauchgas aus kleinen Verbrennungsanlagen oder Verbrennungsanlagen mit geringer Vollastbenutzung kostengünstig gereinigt und das Schüttmaterial zwischengelagert werden. Das beladene Schüttmaterial kann über eine zentrale Verbrennungsanlage mit Rauchgasentschwefelungsanlage kostengünstig entsorgt werden.

## Ansprüche

1. Verfahren zur Abscheidung von Schwefeloxiden aus Rauchgasen mittels eines Schüttmaterials, wobei die Rauchgase durch ein Bett aus Schüttmaterial geleitet werden.
**dadurch gekennzeichnet,** daß das Schüttmaterial in stückiger Form vorliegt und das Schüttmaterial zu 30 - 100 % aus Klärschlamm besteht.

2. Verfahren nach Anspruch 1,
**dadurch gekennzeichnet,** daß der Klärschlamm aus einer Behandlung von kommunalem und/oder industriellem Abwasser in bekannter Weise gewonnen wird.

3. Verfahren nach Anspruch 1 und 2,
**dadurch gekennzeichnet,** daß die Rauchgase ein sich von oben nach unten bewegendes Wanderbett durchströmen.

4. Verfahren nach Anspruch 1 bis 3,
**dadurch gekennzeichnet,** daß das beladene, abgezogene Schüttmaterial einem Verbrennungskessel zugeführt wird.

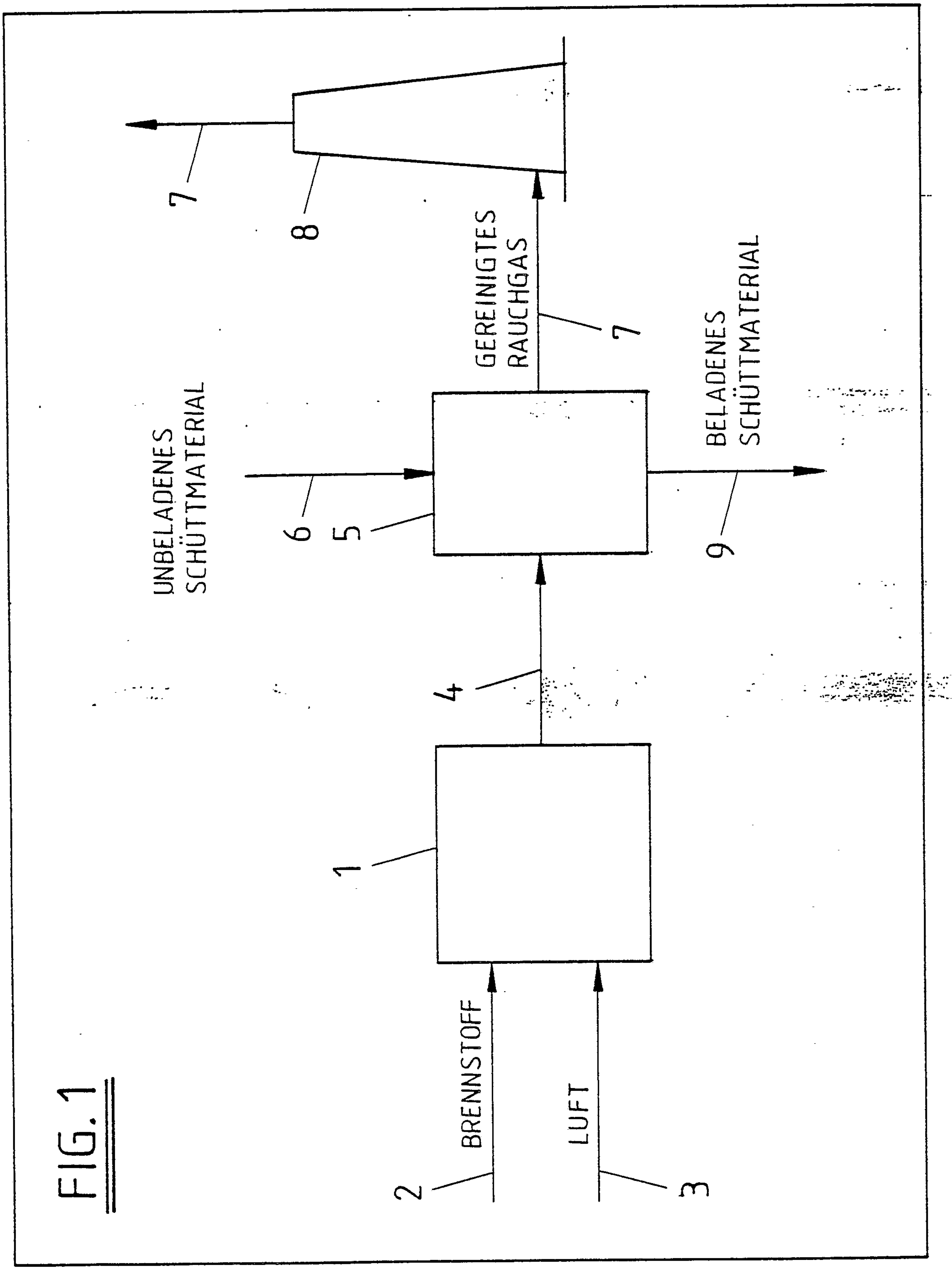
UNBELADENES SCHÜTTMATERIAL
GEREINIGTES RAUCHGAS
BELADENES SCHÜTTMATERIAL
BRENNSTOFF
LUFT
1
2
3
4
5
6
7
7
8
9

FIG. 1

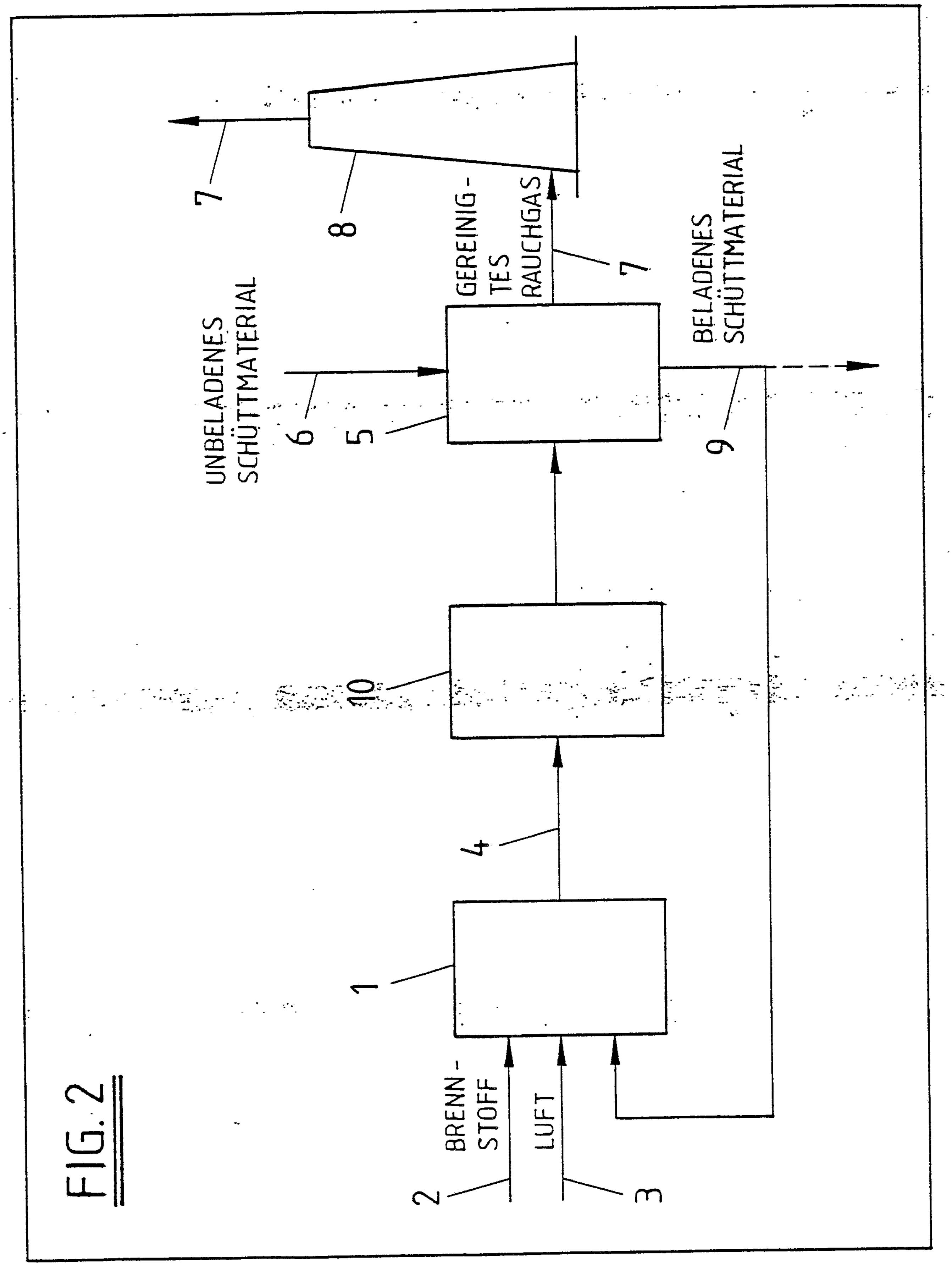
UNBELADENES SCHÜTTMATERIAL
GEREINIG-TES RAUCHGAS
BELADENES SCHÜTTMATERIAL
BRENN-STOFF
LUFT
1
2
3
4
5
6
7
7
8
9
10

FIG. 2

Europäisches Patentamt

# EUROPÄISCHER RECHERCHENBERICHT

Nummer der Anmeldung

EP 88 11 2598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C-3 314 969 (D. MUELLER)<br>* Ansprüche 1-4,6,8; Beispiele 1,2; Spalte 3, Zeilen 41-60 *<br>--- | 1-4 | B 01 D 53/34 |
| A | DE-A-3 414 044 (MANNESMANN VEBA UMWELTTECHNIK GMBH)<br>* Ansprüche 1-7,17 *<br>----- | 1,3,4 | |
| | | | RECHERCHIERTE SACHGEBIETE (Int. Cl.4) |
| | | | B 01 D 53/00 |

Der vorliegende Recherchenbericht wurde für alle Patentansprüche erstellt

| Recherchenort | Abschlußdatum der Recherche | Prüfer |
|---|---|---|
| BERLIN | 03-11-1988 | BERTRAM H E H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)